# EUROPÄISCHE PATENTSCHRIFT

(11) **EP 1 858 715 B1**
(45) Veröffentlichungstag und Bekanntmachung des Hinweises auf die Patenterteilung: **25.11.2009**
(21) Anmeldenummer: 06755896.5
(22) Anmeldetag: 14.03.2006
(51) Int. Cl.: B60B 1/06

(54) **FAHRZEUGRAD**
VEHICLE WHEEL
ROUE DE VEHICULE

(30) Priorität: 16.03.2005 DE 202005004399 U
(43) Veröffentlichungstag der Anmeldung: 28.11.2007
(73) Patentinhaber: Dymag Racing UK Ltd., Chippenham Wiltshire SN14 6LH (GB)
(72) Erfinder: WILSON, Mike, Corsham, Wiltshire SN13 OEA (GB)
(74) Vertreter: Demski, Siegfried
(86) Internationale Anmeldenummer: PCT/IB2006/001318
(87) Internationale Veröffentlichungsnummer: WO 2006/097856

(56) Entgegenhaltungen:
- WO-A-00/68026
- FR-A1- 2 471 291
- JP-A- 2002 002 202
- US-A- 5 997 102
- US-A1- 2004 021 365

## Beschreibung

Die Erfindung betrifft ein Fahrzeugrad, insbesondere für Personenkraftfahrzeuge und Motorräder, bestehend aus einer zur Aufnahme eines Reifens dienenden Felge und einer die Felge mit einer Radnabe verbindenden Speicheneinheit oder Radschüssel, wobei die Felge aus Kunststoff und die Speicheneinheit oder die Radschüssel aus Metall besteht und die Felge mit der Speicheneinheit oder mit der Radschüssel form- und/oder kraft- oder materialschlüssig verbunden ist, wobei mindestens ein Verbindungselement vorgesehen ist, welches durch das Felgenbett geführt in der Speicheneinheit oder der Radschüssel aufgenommen ist, sodass das Verbindungselement durch einen Reifen einerseits und durch die Speicheneinheit oder die Radschüssel andererseits vollkommen abgedeckt ist.

Fahrzeugräder werden je nach bestimmten Verwendungszweck unterschiedlich aufgebaut. Die technischen Variationen zwischen den einzelnen Fahrzeugrädern werden vor allem durch den Aufbau der Felge bestimmt, welche einen schlauchlosen oder mit Luftschlauch ausgerüsteten Luftreifen aufnehmen soll. Da Fahrzeugräder das äußere Erscheinungsbild von Kraftfahrzeugen wesentlich beeinflussen, wird von Verwendern gewünscht, die Fahrzeugräder individuell auszugestalten. Um eine möglichst hohe Gestaltungsvielfalt mit wenig Bauteilen zu erreichen, werden Fahrzeugräder in einem Baukastenprinzip aus unterschiedlichen Einzelteilen zusammengefügt. Die Felge kann aus Einzelteilen zusammengesetzt werden, was eine technische Vielfalt und Variationsbreite ermöglicht und die Verbindung von Radnabe zu Felge ist bei unterschiedlichen Rädern ebenfalls unterschiedlich ausgeprägt, wodurch eine Variationsbreite auch im Erscheinungsbild des Rades erreicht wird.

Ein aus Einzelteilen bestehendes Rad gewinnt aber mit jedem Einzelteil an Gewicht, was bei Rädern unerwünscht ist. In der Regel wird angestrebt, das Gewicht des Rades und des Reifens möglichst zu verringern, damit die ungefederte Masse in einem Kraftfahrzeug möglichst gering ist.

Durch die Verwendung von Kunststoff als Reifenfelge verliert das Fahrzeugrad erheblich an Gewicht gegenüber einer Vollmetallausführung. Auf eine Kunststoffausführung der Verbindung zwischen Radfelge und Radnabe hat man bisher verzichtet, da Kunststoffe mit entsprechender Stabilität und Temperatur beständigkeit nicht verfügbar sind.

Im Stand der Technik, beispielweise in der DE 41 23 459 C1, wird deshalb vorgeschlagen, die Felgen aus Kunststoff zu fertigen und an die Kunststofffelge eine Reifenschüssel anzubringen, wobei die Reifenschüssel aus Metall besteht. Die Verbindung einzelner Radbestandteile, speziell die Verbindung zwischen Radfelge und Radnabe ist aber nicht unproblematisch. Die Verbindung zwischen Radnabe und Radfelge muss hohe Drehmomente, speziell beim Bremsen aufnehmen, gleichzeitig muss die Verbindung so gestaltet sein, dass die Luftdichtigkeit der Felge für schlauchlose Reifen nicht beeinträchtigt wird.

In der DE 41 23 459 C1 wird deshalb vorgeschlagen, eine metallische Radschüssel auf einen Kranz der Felge zu montieren, der zur Radnabe gerichtet ist. Der in dieser Druckschrift beschriebene Kranz sitzt auf der Radinnenseite, zur Radnabe gerichtet, unter dem Tiefbett der Felge. In diesen Kranz werden von der zum Fahrzeug gerichteten Seite des Rades Schrauben durch Bohrungen gesteckt, die mit ihrem Gewinde in ein entsprechendes Hohlgewinde der Radschüssel greifen. Die einzubringende Radschüssel verdeckt dabei diesen Kranz und liegt auf dem Rand zwischen Hump und Tiefbett der Felge auf. Der in der DE 41 23 459 C1 beschriebene Kranz zur Befestigung der Radschüssel wirft aber erhebliche Probleme bei der Herstellung der Kunststofffelge auf. Durch diesen Kranz wird die Fertigung, beispielweise beim Gießen, erheblich erschwert, da die einteilige Felge nicht mehr aus der Form entnommen werden kann. Zur Lösung dieses Problems wird in der Regel darauf zurückgegriffen, eine mehrteilige Form zu verwenden.

In der US 2004/021365 A1 ist offenbart, dass eine Aluminiumfelge zweiteilig aus Aluminium aufgebaut sein kann, wobei die Felge sowie die Speicheneinheit aus Aluminium gefertigt wird. Gleichwohl wird in der Anmeldung selbst beschrieben, dass die Speicheneinheit auch aus Kunststoff gefertigt werden könnte. Einen Hinweis jedoch, wie die Felge aus Kunststoff aufgebaut werden soll, ist aus der US 2004/021365 A nicht zu entnehmen.

Ein weiteres Problem bei der Herstellung derartig geformter Felgen besteht auch bei der Verwendung von Verbundmaterialien als Kunststofffelge. Beispielweise bei der Herstellung von Faserverbundwerkstoffen wirft dieser Kranz die Problematik auf, dass der Faserverbundstoff innerhalb der Form unzureichend genau platziert werden kann, damit gerade dieser sehr hoch belastete Teil der Felge eine gleichmäßige Faserverstärkung aufweist.

Ein weiteres Problem bei diesem Fahrzeugradtyp ist, dass durch den verwendeten Montagekranz das Fahrzeugrad eine Schmuck- und eine zum Fahrzeug gewandte, weniger geschmückte Seite aufweist. Daher ist ein derart gestaltetes Fahrzeugrad nur für Autos geeignet. Zur Verwendung eines Fahrzeugrades für Motorräder ist es wichtig, dass das Fahrzeugrad von beiden

Seiten der Radebene eine Schmuckseite aufweist, die nicht durch Montageschrauben beeinträchtigt ist.

In der US 4,982,998 wird ein Aufbau für Verbundräder vorgeschlagen, bei dem Montageschrauben durch die Schulter einer Felge geführt sind, die Radschüssel durchbohren und auf der zum Fahrzeug gewandten Seite mit einer Schraubenmutter gesichert sind. Zwar kommt diese Ausführungsform ohne den herstellungsproblematischen Montagekranz aus, ist aber ebenfalls nur für Autos, nicht jedoch für Motorräder geeignet.

Aufgabe der Erfindung ist es daher, ein Fahrzeugrad zur Verfügung zu stellen, welcher aus unterschiedlichen Materialien, vorzugsweise aus faserverstärkten Kunststoff für die Felge und Metall für die Radschüssel oder die Speicheneinheit, gefertigt ist, wobei die Probleme des Standes der Technik nicht vorhanden sind.

Die erfindungsgemäßen Aufgaben werden dadurch gelöst, dass die Speicheneinheit oder die Radschüssel durch mindestens ein Verbindungselement, welches durch das Felgenbett geführt ist, mit der Felge verbunden ist und dass das Verbindungselement in der Speicheneinheit oder der Radschüssel aufgenommen ist, sodass das Verbindungselement durch einen Reifen einerseits und durch die Speichereinheit oder die Radschüssel andererseits, vollkommen abgedeckt ist. Weitere vorteilhafte Ausgestaltungen der Erfindung ergeben sich aus den Unteransprüchen.

Durch die Verbindung der Speicheneinheit oder der Radschüssel mit der Felge durch mindestens ein Verbindungselement, welches durch das Felgenbett geführt ist, erhebt sich der Vorteil, dass auf einen Kranz, wie er beispielweise in der DE 41 23 459 C1 gelehrt wird, verzichtet werden kann, wodurch die Problematik bei der Herstellung eines hochbelastbaren Felgeninnenkranzes vermieden wird. Dadurch, dass das mindestens eine Verbindungselement durch das Felgenbett geführt wird, kann eine Radschüssel oder eine Speicheneinheit formschlüssig in die Felgeninnenseite, wobei mit Felgeninnenseite die zur Radnabe gerichtete Seite der Felge gemeint ist, eingepasst werden und das mindestens eine Verbindungselement verbindet die Radschüssel oder die Speicheneinheit mit der Felge durch die Felge hindurch. Die Verwendung von Kunststoffen ermöglicht es dabei, eine zuverlässige Dichtung des Felgenbetts zu erreichen, welche bei Verwendung von Metallfelgen im Stand der Technik bisher nicht möglich war. Gegenüber einer Metallfelge kann bei einer Felge aus Kunststoff auf Materialien zurückgegriffen werden, die sich mit dem Kunststoff verbinden und so zumindest auf der dem Kunststoff zugewandten Seite eine hohe Dichtigkeit zur Verfügung stellen können. Sofern es sich hierbei um einen deformierbaren Kunststoff handelt, der als Dichtungsmasse verwendet wird, ist es ebenfalls möglich, die Seite zum Verbindungselement, beispielweise eine Schraube oder ein Niet, verlässlich abzudichten, sodass die Felge auch als Sitz für einen schlauchlosen Reifen verwendet werden kann.

Darüber hinaus bietet die Verbindung zwischen Radschüssel oder Speichenelement mit der Felge durch das Felgenbett hindurch den Vorteil, dass einseitige, die Felge mechanisch stark belastende Spannungen durch die Verwendung eines Montagekranzes auf der zur Radnabe gewandten Seite vermieden werden können, Weil sich die Radschüssel oder weil sich das Speichenelement im Inneren der Felge abstützt.

In bevorzugte Weise besteht die Felge aus kohlefaserverstärktem Kunststoff, ganz besonders bevorzugt besteht die Felge aus kohlefaserverstärktem Epoxidharz. Durch die Verwendung von kohlefaserverstärktem Epoxidharz wird erreicht, dass einerseits das Gewicht des gesamten Fahrzeugrades in erheblicher Weise gegenüber einem Metallrad verringert wird und somit die ungefederte Masse eines Fahrzeuges ebenfalls stark verringert wird. Des Weiteren ermöglicht die Verwendung von Epoxidharz die Verwendung von Dichtungen, welche sich mit der Oberfläche des Epoxidharzes verbinden, da Epoxidharz klebbar ist, sodass eine hohe Dichtung der Durchführung des mindestens einen Verbindungselementes erreichbar ist. Des Weiteren ist es von Vorteil, dass kohlefaserverstärktem Epoxidharz eine höhere Stabilität aufweist als beispielweise Stahl von gleichem Gewicht.

Bei der Verwendung von Fasergeweben und -gelegen zur Verstärkung des Epoxidharzes kann auf unterschiedliche Faseranordnungen zurückgegriffen werden. Es ist einerseits möglich, die Fasern in tangentialer Richtung um die Felge zu wickeln, sodass eine besonders hohe Drehmomentfestigkeit der Felge erreicht wird. Darüber hinaus ist es auch möglich, Fasergeweben und -gelegen als Faserbestandteil in dem Epoxidharz zu verwenden, welche nach den üblichen Webverfahren hergestellt werden, sodass beispielweise eine Diagonallage der Fasern eine senkrechte oder eine parallele Anordnung oder eine gemeinsame Anordnung verschiedener Richtungen der Fasern bezüglich der tangentialen Felgenbettebene vorliegt. Je nach Wahl der Faserorientierung weist die Felge unterschiedliche Festigkeitseigenschaften in unterschiedlichen Richtungen auf. Der Fachmann kann je nach gewünschtem Festigkeitsprofil die Faserrichtung der Fasern im Epoxidharz wählen und kann auch Kombinationen von unterschiedlichen Faserrichtungen als Faserverstärkung wählen.

In einer weiteren vorteilhaften Ausgestaltung der Erfindung führt ein Ventilloch von der Felgenmaulseite zur radnabengerichteten Seite. Durch die Verwendung eines Ventillochs, welches von der Felgenmaulseite zur radnabengerichteten Seite führt, ist es möglich, das Ventilloch auch an versteckter Stelle innerhalb des Rades zu platzieren, sodass das Ventil den optischen Eindruck des Rades nicht beeinträchtigt.

In spezieller Ausgestaltung der Erfindung ist ein Ventilloch zur Aufnahme einer Verbindung zwischen Felge und Speicheneinheit oder Radschüssel vorgesehen, wobei die Verbindung hohl zur Durchführung von Reifengas ausgeführt ist. Durch die Verwendung eines Ventillochs zur Aufnahme der Verbindung zwischen Felge und Speicheneinheit oder Radschüssel wird erreicht, dass das Ventilloch innerhalb einer Speicheneinheit oder der Radschüssel verläuft, sodass auf eine weitere Bohrung durch das Felgenbett hindurch verzichtet werden kann, was die Stabilität des Felgenbettes erhöht und was auch die Möglichkeit bietet, ein Luftventil optisch zu verstecken.

In vorteilhafter Weise ist das mindestens eine Verbindungselement, welches durch das Felgenbett geführt ist, mit mindestens einer Dichtung auf der Felgenmaulseite ausgerüstet, wobei die Dichtung aus Papier, aus Gummi, aus Silikon, aus Polyurethan oder aus einem anderen Elastomer besteht. Neben der Verwendung von Dichtungen zur Abdichtung der Felge ist es auch möglich, beispielweise durch Verwendung von Kompressionsschrauben oder von Schrauben mit einem speziell geformten Kopf eine Dichtigkeit herzustellen, wobei das Verbindungselement so fest mit der Felge verbunden wird, dass eine dichte Verbindungsanordnung entsteht. Bei der Verwendung von Dichtungsmaterialien kann auf eine gegebenenfalls zu starke Verschraubung oder Vernietung verzichtet werden, ohne dass hierdurch die Dichtigkeit der Felge infrage gestellt wird. Besonders bei der Verwendung von Elastomeren als Dichtelement ist, dass die Elastomere im nicht abgebundenen Zustand als Dichtungsmasse eingesetzt werden können, wobei das Elastomer bei der Verbindung abbindet und sich mit der Oberfläche der Felge chemisch verbindet, wodurch ein höherer Grad der Dichtung erreicht wird.

Dabei kann auf weitere Materialien zurückgegriffen werden, um eine erhöhte Dichtung zwischen dem Dichtungsmaterial und dem Verbindungselement selbst herzustellen. Es ist aber auch möglich, den in die Felge ragenden Teil des Verbindungselementes durch das Dichtungsmaterial selber zu verfugen oder zu verkleben. Durch eine Verfugung oder eine Verklebung wird erreicht, dass das Verbindungselement in dem Dichtungsmaterial vollkommen eingebettet ist, sodass sich eine fugen- oder kapillarfreie Dichtung um das mindestens eine Verbindungselement ausbildet.

In Ausgestaltung der Erfindung ist vorgesehen, dass vorzugsweise mehrere Verbindungselemente in Form von Schraubbolzen umfangsverteilt um das Felgenbett angeordnet sind und in Gewindebohrungen der Speicheneinheit oder Radschlüssel eingeschraubt sind.

In bevorzugter Ausgestaltung der Erfindung liegt das Speichenelement oder die Radschüssel formschlüssig auf der radnabengerichteten Seite der Felge auf, wobei die formschlüssige Fläche des Speichenelementes oder der Radschüssel mindestens 1 cm² oder mehr beträgt. Für Räder mit einer geringen Anzahl an Speichen, wobei unter gering 3 bis 9 gemeint ist, aber auch Zahlen, die in der Größenordnung dieser Zahlen liegen, ist es von Vorteil, wenn die Auflagefläche jeder einzelnen Speiche auf der zur Radnabe gerichteten Seite des Feigenbettes so groß ist, dass die Last des Fahrzeuges gleichmäßig auf die Felgenfläche verteilt wird und Punktbelastungen vermieden werden. Hierdurch wird noch eine höhere Stabilität und eine noch höhere Drehmomentbelastbarkeit der Nabe-Felgeverbindung erreicht. Jede Speiche wird hierbei mit mindestens einem Verbindungselement mit dem Felgenbett verbunden.

Das erfindungsgemäße Fahrzeugrad kann als Steilschulterfelge oder als Breitfelge ausgestaltet sein, wobei im Falle der Steilschulterfelge das Speichenelement oder die Radschüssel auf der Felgenschulter aufliegt, im Falle der Breitfelge das Speichenelement oder die Radschüssel auf der zur Radnabe gerichteten Seite des Felgenbettes aufliegt. Darüber hinaus sind auch alle anderen Felgenausführungen denkbar, wobei das Speichenelement oder die Radschüssel auf einer zur Radnabe gerichteten Fläche der Felge aufgebracht werden, die Platz für eine entsprechende Auflagefläche bieten.

Die Felge kann dabei in der Radebene oder auch radial geteilt sein. Bei einer radial geteilten Felge ergibt sich der Vorteil, das verschiedene Felgenbreiten durch ein Baukastensystem zusammengestellt werden können, wobei im Falle eines Speichenelementes die Speichen entweder auf einem Felgenteil oder auch auf beiden Felgenteilen aufliegen können. Es ist auch möglich, das Speichenelement als Verbindungselement für die radial geteilten Felgenteile zu verwenden, wobei jeweils ein Verbindungselement durch die Felgenteile hindurch geführt wird und in das Speichenelement greift, wodurch die radial geteilte Felge zusammengehalten wird. Ebenso ist es auch möglich, dass die Felge radial geteilt ist, wobei in diesem Falle die Felgen ebenfalls durch das Speichenelement oder über die Radschüssel zusammengehalten werden.

Die Erfindung wird im Weiteren anhand der Figuren näher erläutert.

Es zeigt
- Fig. 1: einen senkrechten Querschnitt durch ein erfindungsge- mäßes Fahrzeugrad senkrecht zur Radebene mit einer Speicheneinheit,
- Fig. 2: einen senkrechten Schnitt durch ein erfindungsgemäßes Fahrzeugrad mit radial geteilter Felge,
- Fig. 3: ein erfindungsgemäßes Fahrzeugrad mit einem Schnitt senkrecht zur Radebene mit einer Radschüssel und
- Fig. 4: ein erfindungsgemäßes Fahrzeugrad in Speichenausfüh- rung in einer Frontansicht.

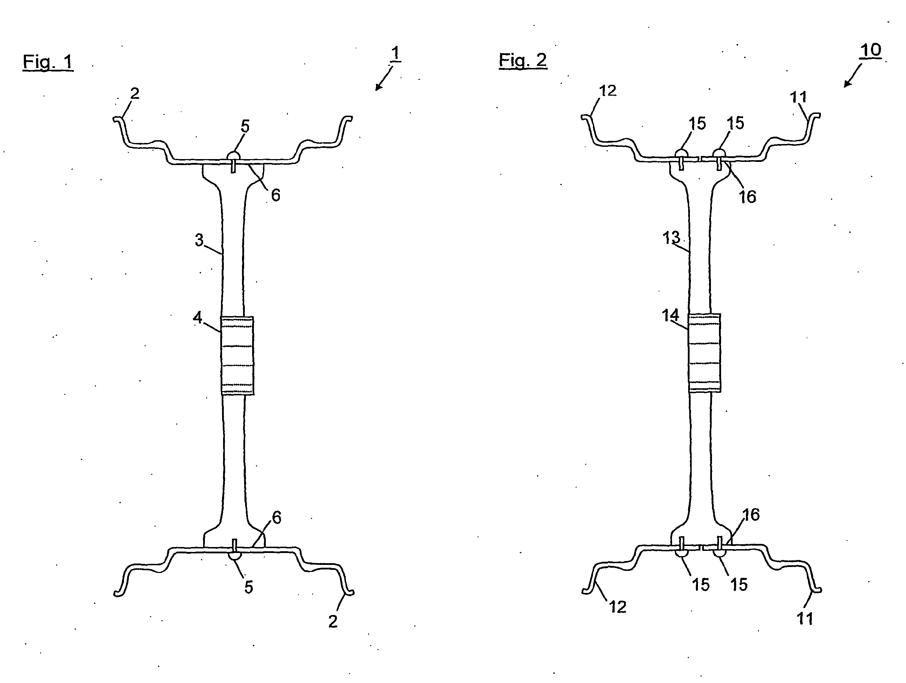

In Figur 1 ist ein erfindungsgemäßes Fahrzeugrad 1 abgebildet, welches aus einer Felge 2 und einer Speicheneinheit 3 besteht. In der Mitte der Speicheneinheit 3 ist die Radnabe 4 aufgenommen, an welche die Fahrzeugachse und die Bremsscheibe eines Fahrzeuges angebracht werden. Die Speicheneinheit 3 ist über Verbindungselemente 5 mit der Felge 2 verbunden, wobei die Speicheneinheit 3 eine vergleichsweise große Auflagefläche 6 auf der zur Radnabe gewandten Seite des Felgenbetts aufweist. Die Verbindungselemente 5 sind von der Felgenmaulseite durch die Felge 2 hindurch geführt und werden von der Speicheneinheit 3 aufgenommen, sodass die Verbindungselemente 5 bei ordnungsgemäßem Gebrauch des Fahrzeugrades 1 durch einen Reifen des Fahrzeugrades einerseits und durch das Speichenelement andererseits vollkommen von der Umgebung abgeschirmt sind.

In Figur 2 ist ein erfindungsgemäßes Fahrzeugrad 10 gezeigt, welches aus zwei radial geteilten Felgenteilen 11, 12 besteht, die mit einer zentralen Speicheneinheit 13 miteinander verbunden sind. Die die beiden Felgenteile 11, 12 verbindende Speicheneinheit 13 weist in der Mitte die Radnabe 14 zur Verbindung mit der Bremsscheibe und der Fahrzeugachse eines Fahrzeuges auf. Die beiden Felgenteile 11, 12 sind über mindestens zwei Verbindungselemente 5 von der zum Felgenmaul der Felge gerichteten Seite durch die Felgenteile 11, 12 hindurch, je mit einem Verbindungselement 15 verbunden, wobei das zentrale Speichenelement 13 die beiden radial geteilten Felgenteile 11, 12 zusammenhält. Dabei liegt die zentrale Speicheneinheit 13 auf der zur Radnabe gewandten Seite des Felgenbettes, das von den Felgenteilen 11, 12 gebildet wird, auf und überträgt so die Fahrzeuglast auf die Felge aus den Felgenteilen 11, 12.

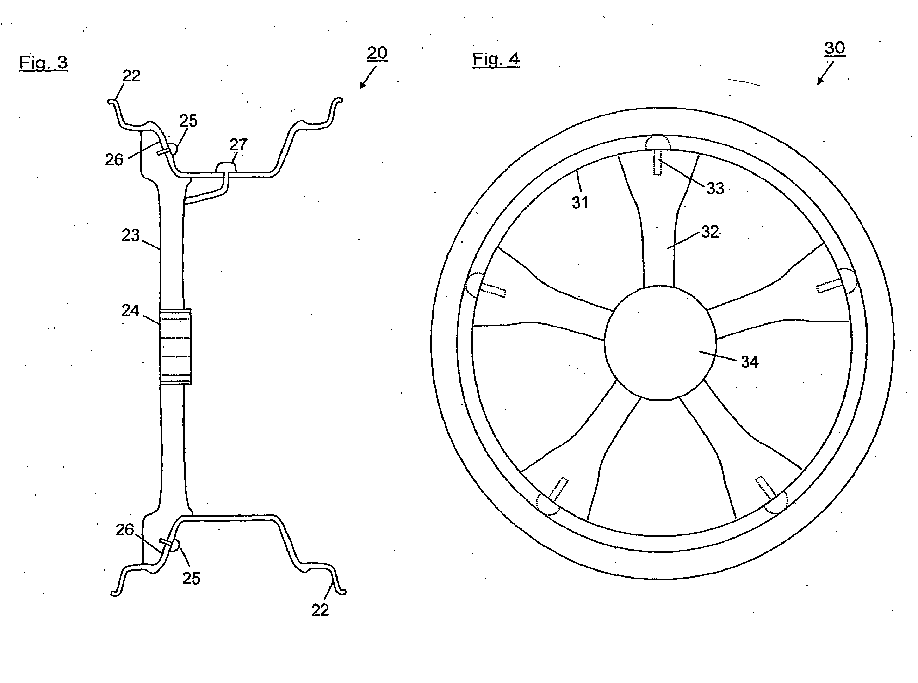

In Figur 3 ist ein erfindungsgemäßes Fahrzeugrad 20 abgebildet, welches aus einer Steilschulterfelge 22 und einer zentralen Radschüssel 23 besteht. Die zentrale Radschüssel 23 weist eine Radnabe 24 auf, worüber das erfindungsgemäße Fahrzeugrad 20 mit Bremsscheibe und Fahrzeugachse eines Fahrzeuges verbunden wird. Die Radschüssel 23 ist über Verbindungselemente 25 durch die Steilschulterfelge 22 verbunden, wobei die Verbindungselemente 25 vollkommen in der Radschüssel 23 aufgenommen sind. Bei ordnungsgemäβem Gebrauch des erfindungsgemäßen Fahrzeugrades 20 sind somit die Verbindungselemente 25 vollkommen von der äußeren Umgebung durch ein Fahrzeugreifen einerseits und durch die Radschüssel 23 andererseits abgeschirmt. In Figur 3 ist zusätzlich ein Ventil 27 abgebildet, welches durch das Felgenbett der Steilschulterfelge 22 hindurch geführt ist.

In Figur 4 ist ein erfindungsgemäßes Fahrzeugrad 30 abgebildet, welches aus einer Felge 31 und fünf Speichen 32 besteht. Die einzelnen Speichen 32 sind lediglich an der Radnabe 34 miteinander materialschlüssig verbunden, und weisen an ihrem Umfang im Bereich der Felge keine Verbindung außer über die Felge 31 auf. Die einzelnen Speichen 32 dienen zur Aufnahme eines Verbindungselementes 33, welches durch das Felgenbett geführt ist und somit die Felge 31 mit den einzelnen Speichen 32 verbindet. Durch die erfindungsgemäße Anordnung der Verbindungselemente 33, die durch die Felge 31 hindurch geführt sind und in einer Speiche 32 aufgenommen sind, werden die Verbindungselemente 33 optisch versteckt, sodass kein Verbindungselement 33 äußerlich erkennbar ist.

In den Figuren 1 bis 3 sind unterschiedliche Ausgestaltungen der Erfindung dargestellt, wobei die Figuren die Erfindung nicht abschließend beschreiben. Die Ausführungsbeispiele sind stellvertretend für eine Vielzahl von verschiedenen Felgenformen und eine unterschiedliche Gestaltung der Radschüssein oder der Speicheneinheit anzusehen.

### Bezugszeichenliste

- 1: Fahrzeugrad
- 2: Felge
- 3: Speicheneinheit
- 4: Radnabe
- 5: Verbindungselement
- 6: Auflagefläche
- 10: Fahrzeugrad
- 11: Felgenteil
- 12: Felgenteil
- 13: Speicheneinheit
- 14: Radnabe
- 20: Fahrzeugrad
- 22: Steilschulterfelge
- 23: Radschüssel
- 24: Radnabe
- 25: Verbindungselement
- 27: Ventil
- 30: Fahrzeugrad
- 31: Felge
- 32: Speiche
- 33: Verbindungselement
- 34: Radnabe

## Patentansprüche

1. Fahrzeugrad (1), insbesondere für Personenkraftfahrzeuge und Motorräder, bestehend aus einer zur Aufnahme eines Reifens dienenden Felge (2) und einer die Felge (2) mit einer Radnabe (4, 14, 24) verbindenden Speicheneinheit (3, 13) oder Radschüssel (23), wobei die Felge (2) aus Kunststoff und die Speicheneinheit oder die Radschüssel (23) aus Metall besteht und die Felge mit der Speicheneinheit (3, 13) oder mit der Radschüssel (23) form- und/oder kraft- oder materialschlüssig verbunden ist, wobei mindestens ein Verbindungselement (5, 25) vorgesehen ist, welches durch das Felgenbett geführt in der Speicheneinheit (3, 13) oder der Radschüssel (23) aufgenommen ist, sodass das Verbindungselement (5, 25) durch einen Reifen einerseits und durch die Speicheneinheit (3,13) oder die Radschüssel (23) andererseits vollkommen abgedeckt ist,
**dadurch gekennzeichnet,**
**dass** die Felge (2) aus kohlefaserverstärktem Kunststoff, bevorzugt aus kohlefaserverstärktem Epoxydharz, besteht und die Fasern oder der Faserverbund um die Rotationsachse gewickelt ist, wobei das wenigstens eine Verbindungselement (5, 25) mindestens eine Dichtung auf der Felgenmaulseite aufweist.

2. Fahrzeugrad nach Anspruch 1,
**dadurch gekennzeichnet,**
**dass** ein Ventilloch von der Felgenmaulseite zur radnabengerichteten Seite des Felgenbetts führt.

3. Fahrzeugrad nach Anspruch 2,
**dadurch gekennzeichnet,**
**dass** ein Ventilloch zur Aufnahme einer Verbindung zwischen Felge (2) und Speicheneinheit (3, 13) oder Radschüssel (23) vorgesehen ist, wobei die Verbindung hohl zur Durchführung von Reifengas ausgeführt ist.

4. Fahrzeugrad nach Anspruch 1, 2 oder 3,
**dadurch gekennzeichnet,**
**dass** die Dichtung aus Papier, aus Gummi, aus Silikon, aus Polyurethan oder aus einem anderen Elastomer besteht.

5. Fahrzeugrad nach einem der Ansprüche 1 bis 4,
**dadurch gekennzeichnet,**
**dass** vorzugsweise mehrere Verbindungselemente (5, 25) in Form von Schraubbolzen umfangsverteilt um das Felgenbett angeordnet sind und in Gewindebohrungen der Speicheneinheit (3, 13) oder Radschlüssel (23) eingeschraubt sind.

6. Fahrzeugrad nach einem der Ansprüche 1 bis 5,
**dadurch gekennzeichnet,**
**dass** die Dichtung mit dem mindestens einen Verbindungselement (5, 25) durch ein weiteres Material oder durch das Dichtungsmaterial selber verklebt ist.

7. Fahrzeugrad nach einem der Ansprüche 1 bis 6,
**dadurch gekennzeichnet,**
**dass** die Speicheneinheit (3, 13) oder die Radschüssel (23) formschlüssig auf der radnabengerichteten Seite aufliegt und wobei die formschlüssige Fläche mindestens 1 cm² beträgt.

8. Fahrzeugrad nach Anspruch 6,
**dadurch gekennzeichnet,**
**dass** die Felge (2) als Steilschulterfelge ausgeformt ist und das Speicheneinheit (3, 13) oder die Radschüssel (23) formschlüssig auf der radnabengerichteten Seite der Felgenschulter aufliegt und wobei die formschlüssige Fläche mindestens 1 cm² beträgt.

9. Fahrzeugrad nach einem der Ansprüche 1 bis 8,
**dadurch gekennzeichnet,**
**dass** die Felge (2) in der Radebene oder radial geteilt ist.

10. Fahrzeugrad nach einem der Ansprüche 1 bis 9,
**dadurch gekennzeichnet,**
**dass** eine Speichenausführung vorgesehen ist, wobei die einzelnen Speichen (32) nur im Bereich der Radnabe (34) materialschlüssig miteinander verbunden sind.

## Claims

1. Vehicle wheel (1), in particular for passenger cars and motorcycles, consisting of a rim (2) for receiving a tire, and a spoke unit (3, 13) or wheel disk (23) connecting the rim (2) with a wheel hub (4, 14, 2a), the rim (2) consisting of plastics and the spoke unit or the wheel disk (23) consisting of metal, and the rim being connected with the spoke unit (3, 13) or with the wheel disk (23) with a form-fit and/or force-fit or a material-fit, where at least one connection element (5, 25) is provided which is guided through the rim well and received in the spoke unit (3, 13) or the wheel disk (23), so that the connection element (5, 25) is completely covered on the one hand by a tire and on the other hand by the spoke unit (3, 13) or the wheel disk (23),
**characterized in that**
the rim (2) consists of carbon fiber reinforced plastic, preferably of carbon fiber reinforced epoxy resin, and the fibers or the fiber composite are/is wound about the axis of rotation, the at least one connection element (5, 25) comprising at least one seal on the rim flange side.

2. Vehicle wheel according to claim 1,
**characterized in that**
a valve hole passes from the rim flange side to the side of the rim well facing the wheel hub.

3. Vehicle wheel according to claim 2,
**characterized in that**
a valve hole is provided for receiving a connection between the rim (2) and the spoke unit (3, 13) or wheel disk (23), wherein the connection is designed to be hollow to permit the passage of tire gas.

4. Vehicle wheel according to claim 1, 2 or 3,
**characterized in that**
the seal consists of paper, rubber, silicone, polyurethane or of any other elastomer.

5. Vehicle wheel according to one of claims 1 to 4,
**characterized in that**
several connection elements (5, 25) are preferably arranged to be distributed at the periphery around the rim well in the form of studs and screwed into threaded holes of the spoke unit (3, 13) or the wheel disk (23).

6. Vehicle wheel according to one of claims 1 to 5,
**characterized in that**
the seal is glued with the at least one connection element (5, 25) by a further material or by the sealing material itself.

7. Vehicle wheel according to one of claims 1 to 6,
**characterized in that**
the spoke unit (3, 13) oh the wheel disk (23) rests on the side facing the wheel hub in a form-fit, and wherein the form-fit area is at least 1 cm².

8. Vehicle wheel according to claim 6,
**characterized in that**
the rim (2) is shaped as tapered rim, and the spoke unit (3, 13) or the wheel disk (23) rests on the side of the rim bead seat facing the wheel hub in a form-fit, and wherein the form-fit area is at least 1 cm².

9. Vehicle wheel according to one of claims 1 to 8,
**characterized in that**
the rim (2) is divided in the wheel plane or is divided radially.

10. Vehicle wheel according to one of claims 1 to 9,
**characterized in that**
a spoke design is provided where the individual spokes (32) are connected to each other with a material-fit only in the region of the wheel hub (34).

## Revendications

1. Roue de véhicule (1), destinée notamment à des voitures particulières et des motos, comprenant une jante (2) servant à recevoir un pneu et une unité à rayons (3, 13) ou un disque de roue (23) reliant la jante (2) au moyeu (4, 14, 24), la jante (2) étant réalisée en matière plastique et l'unité à rayons ou le disque de roue (23) en métal, et la jante étant raccordée à l'unité à rayons (3, 13) ou au disque de roue (23) par liaison de forme et/ou par liaison de force ou liaison de matière, au moins un élément de raccordement (5, 25) étant prévu, qui est logé dans l'unité à rayons (3, 13) ou dans le disque de roue (23) guidé à travers la base de la jante, de telle sorte que l'élément de raccordement (5, 25) est entièrement recouvert, d'un côté, par un pneu ou, de l'autre côté, par l'unité à rayons (3, 13) ou le disque de roue (23) **caractérisée par le fait que** la jante (2) est constituée de matière plastique renforcée de fibres de carbone préférentiellement de résine époxyde renforcée de fibres de carbone et que les fibres ou le composite fibreux sont enroulés autour de l'axe de rotation, au moins un élément de raccordement (5, 25) présentait au moins un joint du côté de la gorge de jante.

2. Roue de véhicule selon la revendication 1, **caractérisée par le fait qu'**un trou de soupape mène du côté de la gorge de jante au côté de la jante orientée vers le moyeu.

3. Roue de véhicule selon la revendication 2, **caractérisée par le fait qu'**un trou de soupape est prévu pour recevoir un raccordement entre la jante (2) et l'unité à rayons (3, 13) ou le disque de roue (23), le raccordement étant réalisé en creux pour permettre la circulation de gaz pour pneumatiques.

4. Roue de véhicule selon la revendication 1, 2 ou 3, **caractérisée par le fait que** le joint est constitué de papier, de caoutchouc, de silicone, de polyuréthane ou d'un autre élastomère,

5. Roue de véhicule selon une des revendications 1 à 4, **caractérisée par le fait que** préférentiellement plusieurs éléments de raccordement (5, 25) sont disposés sous la forme de boulons filetés répartis sur la périphérie de la base de la jante et sont vissés dans des alésages taraudés de l'unité à rayons (3, 13) ou du disque de roue (23).

6. Roue de véhicule selon une des revendications 1 à 5, **caractérisée par le fait que** le joint est collé avec au moins un élément de raccordement (5, 25) par un autre matériau ou par le matériau d'étanchéité lui-même.

7. Roue de véhicule selon une des revendications 1 à 6, **caractérisée par le fait que** l'unité à rayons (3, 13) ou le disque de roue (23) s'appuie par liaison de forme sur le côté orienté vers le moyeu, la surface par liaison de forme couvrant au moins 1 cm².

8. Roue de véhicule selon la revendication 6, **caractérisée par le fait que** la jante (2) présente la forme d'une jante à bord oblique et l'unité à rayons (3, 13) ou le disque de roue (23) s'appuie par liaison de forme sur le côté du bord de la jante orienté vers le moyeu, la surface par liaison de forme couvrant au moins 1 cm².

9. Roue de véhicule selon une des revendications 1 à 8, **caractérisée par le fait que** la jante (2) est divisée au niveau de la roue ou radialement.

10. Roue de véhicule selon une des revendications 1 à 9, **caractérisée par le fait que** une réalisation de rayons est prévue, dans laquelle les différents rayons (32) ne sont raccordés que dans la zone du moyeu (34) par liaison de matière.
